# EUROPEAN PATENT APPLICATION

(11) **EP 3 101 527 A1**
(43) Date of publication of application: **07.12.2016**
(21) Application number: 16172057.8
(22) Date of filing: 30.05.2016
(51) Int. Cl.: G06F 3/0488, G06F 3/0484

(54) **INFORMATION PROCESSING DEVICE, INFORMATION PROCESSING PROGRAM, AND INFORMATION PROCESSING METHOD**

(30) Priority: 02.06.2015 JP 2015112281
(71) Applicant: Konica Minolta, Inc., Tokyo 100-7015 (JP)
(72) Inventor: Takamura, Shunsuke, Tokyo, 100-7015 (JP); Ogino, Shinya, Tokyo, 100-7015 (JP); Takeuchi, Kazuma, Tokyo, 100-7015 (JP)
(74) Representative: Henkel, Breuer & Partner

(57) **Abstract**

An information processing device includes: an operation receiver capable of receiving a gesture operation including resizing; a gesture analysis section that identifies the gesture operation performed via the operation receiver; and a display control section that reflects, when the gesture operation identified by the gesture analysis section is resizing, the resizing of an object on a screen. The information processing device further includes: an object-size acquisition section that acquires a size of the object being a target for the gesture operation performed via the operation receiver; and a size-change setting section that sets a size change associated with resizing performed by a first gesture operation for a first object to a first degree, when the size of the first object acquired by the object-size acquisition section is a first size, and that sets a degree of a size change associated with resizing performed by the first gesture operation for a second object to a second degree, when the size of the second object acquired by the object-size acquisition section is a second size which is larger than the first size, the second degree being smaller than the first degree, in which the display control section reflects the resizing of the object on the screen in accordance with the degree of the size change set by the size-change setting section.

## Description

### BACKGROUND OF THE INVENTION

### 1. Field of the Invention

The present invention relates to an information processing device, an information processing program, and an information processing method which support information input using a gesture operation.

### 2. Description of Related Art

In recent years, information processing devices provided with a touch panel, in which information can be input by directly touching the screen with a contact member such as a finger or a stylus as with smartphones, tablet terminals, or electronic whiteboards have been practically used. When a predetermined gesture operation is performed on the touch panel of the above-mentioned information processing device, a process assigned to the gesture operation (e.g., movement of an object or the like) is executed. Hereinafter, although a description will be given of a case where a touch panel is used as the input device, the information input by a gesture operation is performed by an input device called a touch pad as well.

A gesture operation of touching one point on the touch panel is called a single touch gesture, and a gesture operation of simultaneously touching two or more points on the touch panel is called a multiple touch gesture. In recent years, the advancement of the multiple touch gesture technology has made it possible to perform diversified and complicated operations.

Examples of the gesture operation include pinch-out which is an operation of enlarging an object by touching and then sliding two points on the object in such a manner as to move the touch points away from each other, pinch-in which is an operation of reducing the size of an object by touching and then sliding two points on the object in such a manner as to bring the touch points close to each other, and the like. In the following description, pinch-out and pinch-in are referred also to as "resizing." Note that, resizing includes, in addition to enlargement/reduction of an object to a similar shape in longitudinal and lateral directions, enlargement/reduction of an object in only a vertical direction or in only a lateral direction.

Examples of the information processing device provided with a touch panel (e.g., smart phone) according to the related art include one in which the enlargement rate and reduction rate for resizing are predetermined in accordance with the operation content. In such an information processing device, enlargement or reduction is performed in accordance with the amount or proportion corresponding to, for example, the operation amount or operation rate, i.e., the amount or rate corresponding to the change amount or change rate of the distance between two touch points (hereinafter, referred to as "inter-point distance"). More specifically, there is one that performs enlargement or reduction of an object using "inter-point distance after operation ÷ inter-point distance before operation" as the enlargement rate or reduction rate. For example, PTL 1 (Japanese Patent Application Laid-Open No. 2012-121179) discloses an image forming apparatus provided with a preview function for enlarging or reducing an object to a standard-size when the operation speed of resizing, that is, the change speed of the inter-point distance (hereinafter referred to as "inter-point change speed") is equal to or greater than a threshold value, for example.

In the information processing device according to the related art, the enlargement-reduction rate used for resizing an object is set regardless of the size of the target object. For this reason, even for the same change rate of inter-point distance (hereinafter, referred to as "inter-point change rate"), the change amount varies depending on the size of the object. More specifically, the larger the size of the object, the larger the change amount will be. Thus, it is difficult to make a fine adjustment in resizing of a large-size object.

### SUMMARY OF THE INVENTION

An object of the present invention is to provide an information processing device, an information processing program, and an information processing method which can improve the operability for resizing of an object using a multiple touch gesture.

To achieve at least one of the abovementioned objects, an information processing device reflecting one aspect of the present invention includes: an operation receiver capable of receiving a gesture operation including resizing; an object-size acquisition section that acquires a size of the object being a target for the gesture operation performed via the operation receiver; a size-change setting section that sets a size change associated with resizing performed by a first gesture operation for a first object to a first degree, when the size of the first object acquired by the object-size acquisition section is a first size, and that sets a degree of a size change associated with resizing performed by the first gesture operation for a second object to a second degree, when the size of the second object acquired by the object-size acquisition section is a second size which is larger than the first size, the second degree being smaller than the first degree; a gesture analysis section that identifies the gesture operation performed via the operation receiver; and a display control section that reflects, when the gesture operation identified by the gesture analysis section is resizing, the resizing of the object on a screen in accordance with the degree of the size change set by the size-change setting section.

An information processing program reflecting one aspect of the present invention causes a computer of an information processing device including an operation receiver capable of receiving a gesture operation including resizing to execute processing including: acquiring a size of an object being a target for the gesture operation performed via the operation receiver; setting a size change associated with resizing performed by a first gesture operation for a first object to a first degree, when the acquired size of the first object is a first size; setting a degree of a size change associated with resizing performed by the first gesture operation for a second object to a second degree, when the acquired size of the second object is a second size which is larger than the first size, the second degree being smaller than the first degree; identifying the gesture operation performed via the operation receiver; and reflecting the resizing of the object on a screen in accordance with the set degree of the size change, when the identified gesture operation is resizing.

An information processing method reflecting one aspect of the present invention is used in an information processing device including an operation receiver capable of receiving a gesture operation including resizing, the method including: acquiring a size of an object being a target for the gesture operation performed via the operation receiver; setting a size change associated with resizing performed by a first gesture operation for a first object to a first degree, when the acquired size of the first object is a first size; setting a degree of a size change associated with resizing performed by the first gesture operation for a second object to a second degree, when the acquired size of the second object is a second size which is larger than the first size, the second degree being smaller than the first degree; identifying the gesture operation performed via the operation receiver; and reflecting the resizing of the object on a screen in accordance with the set degree of the size change, when the identified gesture operation is resizing.

According to the present invention, the degree of a size change of the object at the time of resizing is appropriately set in accordance with the size of the operation target object. Thus, a fine adjustment is made possible even for a large-size object, so that the user can enlarge or reduce the object up or down to a desirable size. Accordingly, the operability in resizing using a multi-touch gesture is significantly improved.

### BRIEF DESCRIPTION OF DRAWINGS

The present invention will become more fully understood from the detailed description given hereinbelow and the appended drawings which are given by way of illustration only, and thus are not intended as a definition of the limits of the present invention, and wherein:
FIG. 1 is a schematic view of an electronic whiteboard according to an embodiment of the present invention;
FIG. 2 is a block diagram illustrating a hardware configuration of an electronic whiteboard;
FIG. 3 is a functional block diagram illustrating functions of a controller of the electronic whiteboard;
FIG. 4 is a flowchart illustrating an exemplary gesture analysis process; and
FIGS. 5A and 5B are diagrams for illustrating the degrees of resizing during pinch-out.

### DESCRIPTION OF THE PREFERRED EMBODIMENTS

In the following, an embodiment of the present invention will be described in detail with reference to the accompanying drawings.

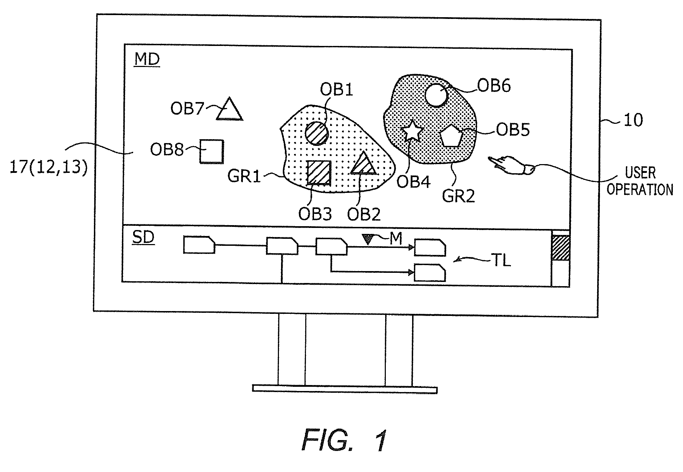

FIG. 1 is a schematic view of electronic whiteboard 10, which serves as an information processing device according to an embodiment of the present invention. Electronic whiteboard 10 is used as a conference support apparatus that stores screen transition based on a user operation and manages the flow of the conference in a time-series manner, for example. Specifically, when a user adds an object that appears and serves as an element of the proceedings in the conference to the display region of display section 13 or operates a displayed object using operation receiver 12 of electronic whiteboard 10, information relating to the screen at this time (hereinafter referred to as "screen information") is stored.

The term "object" herein refers to data to be operated, and is displayed on display section 13 in the form of a text box in which letters or marks are input, a graphic, a photographic image, a work area (window) of an application, or the like. In the present embodiment, the object is displayed in the form of a simple graphic. In addition, the operations of changing the state of objects such as adding (newly creating), moving, resizing (enlarging/reducing), rotating, editing, deleting, grouping, ungrouping and the like of objects are each referred to as "object operation."

In FIG. 1, display section 13 of electronic whiteboard 10 is sectioned into main screen MD on which objects are displayed, and sub-screen SD on which a tree structure diagram (hereinafter referred to as "time line") capable of visually presenting the flow of the conference is displayed. Main screen MD is an individual work area of electronic whiteboard 10. It is possible to adopt a configuration in which main screen MD is normally displayed while the sub-screen is displayed as necessary, or a configuration in which switching between main screen MD and sub-screen SD is performed and sub-screen SD is displayed on the entire display region.

In FIG. 1, eight objects, OB1 to OB8, are created on main screen MD, and objects OBI to OB3, and objects OB4 to OB6 are grouped into respective groups (groups GR1 and GR2). Time line TL of a case where the discussion is branched at an optional time point is displayed on sub-screen SD. When the discussion is branched in the course of the discussion, multiple conclusions are obtained.

The user performs an object operation on main screen MD, and a time line operation on sub-screen SD. The time line operation refers to an operation performed using time line TL, and includes an operation of moving marker M, and a branching operation of branching a discussion. For example, the user can reproduce a screen at an optional time point on main screen MD by moving marker M on time line TL.

Of the object operations, dragging, resizing, and rotating of an object are performed by gesture operations (which include a single touch gesture and a multiple touch gesture). The gesture operation may be performed using a single hand or both hands. Note that, resizing includes deformation of an object by enlarging/reducing the object to a similar shape in vertical and horizontal directions, and deformation of an object by enlarging/reducing the object only in a vertical direction or only in a horizontal direction. In addition, the resizing target is not limited to a single object, and a group formed by grouping a plurality of objects is included in the resizing target objects.

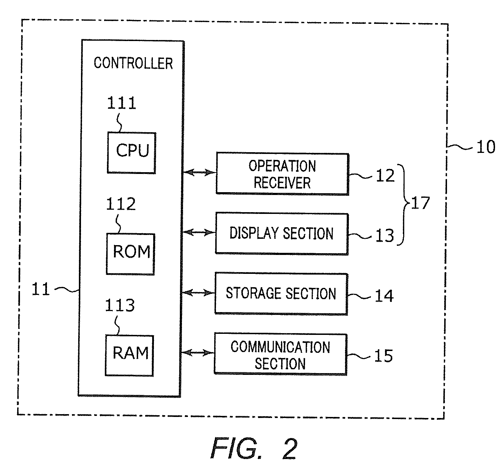

FIG. 2 illustrates an exemplary hardware configuration of electronic whiteboard 10. As illustrated in FIG. 2, electronic whiteboard 10 includes controller 11, operation receiver 12, display section 13, storage section 14, and communication section 15 and/or the like. These blocks are electrically connected through a bus line. When an information processing program described hereinafter is executed by controller 11, an information processing method of the present embodiment is implemented.

Controller 11 includes central processing unit (CPU) 111 serving as a computing/controlling apparatus, read only memory (ROM) 112 and random access memory (RAM) 113 serving as a main storage apparatus. ROM 112 stores basic setting data and a basic program called basic input output system (BIOS). CPU 111 reads out a program suited to processing details from ROM 112 or storage section 14, deploys the program in RAM 113, and controls each block in cooperation with the deployed program.

Operation receiver 12 and display section 13 are included in a flat panel display provided with a touch panel, for example. Various kinds of known devices such as liquid crystal displays, organic EL displays, and electronic paper (memory LCD) displays may be adopted as the flat panel display. In the following description, a constituent element having a function of operation receiver 12 and a function of display section 13 as the flat panel display is referred to as "operation display section 17." Note that, operation receiver 12 and display section 13 may be separate members.

Operation receiver 12 receives handwriting input, an object operation, and a time line operation performed by the user, and outputs a signal corresponding to the received operation (for example, a signal indicating the coordinates of a touch point) to controller 11. While it is assumed in the following description that the user performs the operations using his or her finger(s) of one hand or both hands, the operations may be performed using a body part other than a finger, or a contact member such as a stylus.

In accordance with the display control information input from controller 11, display section 13 displays various kinds of information on main screen MD and sub-screen SD. When operation receiver 12 receives a gesture operation, the operation assigned to the gesture operation is reflected on the screen of display section 13. Controller 11 identifies the gesture operation (including validity/invalidity).

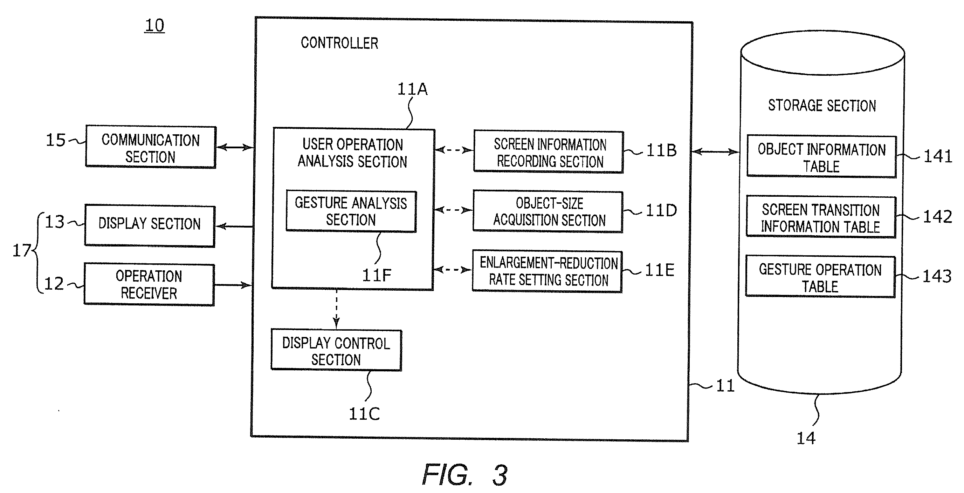

Storage section 14 is, for example, an auxiliary storage apparatus such as a hard disk drive (HDD), a solid state drive (SSD), or a secure digital (SD) card, and stores an information processing program, information relating to screens, and/or the like. Storage section 14 includes object information table 141, screen transition information table 142, gesture operation table 143 and/or the like (see FIG. 3).

Communication section 15 is, for example, a communication interface such as a network interface card (NIC), a modulator-demodulator (MODEM), a universal serial bus (USB), or the like. Controller 11 transmits and receives various kinds of information to and from a terminal apparatus (illustration is omitted) connected to a network such as a cable LAN and/or a wireless LAN through communication section 15. Communication section 15 may be composed of a communication interface for near field wireless communications such as near field communication (NFC), Bluetooth (registered trademark) and/or the like.

FIG. 3 is a functional block diagram illustrating functions of controller 11 of electronic whiteboard 10. As illustrated in FIG. 3, controller 11 functions as user operation analysis section 11A, screen information recording section 11B, display control section 11C, object-size acquisition section 11D, and enlargement-reduction rate setting section 11E. Some or all of these functional parts may be configured by a dedicated hardware.

User operation analysis section 11A analyzes the operation information input from operation receiver 12 and identifies the operation performed by the user. Screen information recording section 11B and display control section 11C execute a predetermined process (for example, enlarging an object by pinch-out or the like) which is preliminarily set in association with the details of the operation based on the user operation identified by user operation analysis section 11A.

User operation analysis section 11A includes gesture analysis section 11F that analyzes the gesture operation performed by the user. When a touch by the user on operation receiver 12 is detected, gesture analysis section 11 F determines whether the gesture operation is valid. To be more specific, gesture analysis section 11F calculates the measured value of the determination index which is set for each gesture operation (for example, dragging, resizing, and rotation) based on a change of the coordinates of the touch point, and compares the measured value with a predetermined threshold value to determine whether the gesture operation is valid. For example, the sliding speed may be used as the determination index of dragging, the inter-point change speed may be used as the determination index of resizing, and the rotating speed may be used as the determination index of rotating.

Screen information recording section 11B records the flow of a conference (screen transition) based on an object operation performed by the user in storage section 14 as screen information. The screen information is information representing the elements forming a screen and when these elements are created and changed. The screen information includes object information for individually managing operations on objects or groups, and screen transition information for managing the flow of a conference in a time-series manner. The object information is stored in object information table 141 of storage section 14, and the screen transition information is stored in screen transition information table 142 of storage section 14.

Display control section 11C generates display control information (screen data) for displaying a screen based on a user operation on display section 13, and controls display section 13 to display the screen based on the screen data. When generating the display control information, display control section 11C acquires required information from storage section 14. The display control information includes screen display control information for displaying a screen reflecting the object operation. When any one of the gesture operations is determined to be valid by gesture analysis section 11F, for example, display control section 11C reflects a process assigned to the gesture operation on the screen of display section 13 with reference to gesture operation table 143.

Object-size acquisition section 11D acquires the size of the object which is the target for the gesture operation performed via operation receiver 12 from screen information recording section 11B.

Enlargement-reduction rate setting section 11E functions as a size-change setting section that changes the degree of a size change of the object. In this embodiment, enlargement-reduction rate setting section 11E sets the enlargement-reduction rate used in size changes. The term "enlargement-reduction rate" means the degree of a size change with respect to the reference operation (e.g., pinch-in operation or pinch-out operation of a certain change amount or change rate) and is a parameter to acquire the enlargement amount/reduction amount, or the enlargement rate/reduction rate of an object by multiplying the change amount or change rate of the inter-point distance (i.e., operation amount or operation rate) by the parameter. Enlargement-reduction rate setting section 11E in the present embodiment sets a smaller enlargement-reduction rate for a larger size object based on the size of the object (including a group) which becomes the target for the size change. In size change, the object is enlarged or reduced in accordance with the enlargement-reduction rate set by enlargement-reduction rate setting section 11E. Hereinafter, an exemplary enlargement-reduction rate setting method will be illustrated.

Table 1 illustrates an exemplary correction coefficient table which is referred when the value resulting from multiplication of the reference enlargement-reduction rate serving as the reference value by the correction coefficient is set as the corrected enlargement-reduction rate. More specifically, in Table 1, enlargement rate/reduction rate = operation rate × enlargement-reduction rate, enlargement amount/reduction amount = operation amount × enlargement-reduction rate, and enlargement-reduction rate = reference enlargement-reduction rate × correction coefficient.

The reference enlargement-reduction rate is the initial enlargement-reduction rate provided as the reference. The reference enlargement-reduction rate, for example, is set to 1 when the size of an object is changed with a change rate equal to the inter-point change rate, and is set to a value greater than 1 (e.g., 1.2) when the size of an object is changed to an extent greater than the inter-point change rate, and is set to 1 when the size of an object is changed with a change rate equal to the inter-point change rate, and is set to a value smaller than 1 (e.g., 0.9) when the size of an object is changed to an extent smaller than the inter-point change rate.

The reference enlargement-reduction rate may be set in association with the change amount of the inter-point distance (hereinafter, referred to as "inter-point change amount"). In this case, the reference enlargement-reduction rate is set to 1 when the size of an object is changed by a change amount equal to the inter-point change amount, and is set to a value greater than 1 (e.g., 1.2) when the size of an object is changed by a change amount greater than the inter-point change amount, and is set to 1 when the size of an object is changed at a change rate equal to the inter-point change rate, and is set to a value smaller than 1 (e.g., 0.9) when the size of an object is changed by a change amount smaller than the inter-point change value, for example.

For the reference enlargement-reduction rate, different values may be set in accordance with the initial inter-point distances. In this case, the reference enlargement-reduction rate is set to 1 when the initial inter-point distance is 20 mm or less, and is set to 0.95 when the initial inter-point distance is 50 mm or greater, and is set to 0.9 when the initial inter-point distance is 100 mm or greater.

In addition, the enlargement-reduction rate used in enlarging an object by pinch-out and the enlargement-reduction rate used in reducing an object by pinch-in are treated as having the same value herein, but the enlargement-reduction rates used in enlargement and reduction may be set, respectively. Note that, in this embodiment, the correction enlargement-reduction rate is generated using a correction coefficient, and the same correction coefficient value is used in enlargement and reduction of an object but different values may be used in enlargement and reduction of the object.

According to Table 1: when the resizing target object corresponds to object No. 1 (e.g., up to 100 cm²), the correction coefficient is "1" (no correction); when the resizing target object corresponds to object No. 2 (e.g., 100 cm² to 200 cm²), the correction coefficient is "0.5;" when the resizing target object corresponds to object No. 3 (e.g., 200 cm² to 300 cm²), the correction coefficient is "0.33;" and when the resizing target object corresponds to object No. 4 (e.g., 300 cm² or greater), the correction coefficient is "0.25." More specifically, a smaller correction coefficient is used for a larger size object, and a small value is set for the enlargement-reduction rate used in enlargement/reduction of an object.

For example, when the reference enlargement-reduction rate is set to "1.2," the enlargement-reduction rates for objects No. 1 to No. 4 are set to "1.2," "0.6," "0.4," and "0.3," respectively. Meanwhile, when the reference enlargement-reduction rate is set to "0.9," the enlargement-reduction rates for objects No. 1 to No. 4 are set to "0.9," "0.45," "0.3," and "0.23," respectively.

**Table 1**

| Object No. | Correction Coefficient |
|---|---|
| 1 (100 cm² or less) | 1 (No Correction) |
| 2 (100 cm² or greater but not greater than 200 cm²) | 0.5 |
| 3 (200 cm² or greater but not greater than 300 cm²) | 0.33 |
| 4 (300 cm² or greater) | 0.25 |

Table 2 is an exemplary correction amount table which is referred when the value resulting from addition and/or subtraction of the correction amount to and/or from the reference enlargement-reduction rate is set as the corrected enlargement-reduction rate. In order words, in Table 2, enlargement rate/reduction rate = operation rate × enlargement-reduction rate, enlargement amount/reduction amount = operation amount × enlargement-reduction rate, and enlargement-reduction rate = reference enlargement-reduction rate ± correction coefficient.

In addition, the enlargement-reduction rate used in enlarging an object by pinch-out and the enlargement-reduction rate used in reducing an object by pinch-in are treated as having the same value herein, but the enlargement-reduction rates used in enlargement and reduction may be set, respectively. Note that, in this embodiment, the correction enlargement-reduction rate is generated using a correction amount, and the same correction amount is used in enlargement and reduction but different values may be used in enlargement and reduction of the object.

According to Table 2: when the resizing target object corresponds to object No. 1 (e.g., up to 100 cm²), the correction amount is "0" (no correction); when the resizing target object corresponds to object No. 2 (e.g., 100 cm² to 200 cm²), the correction amount is "0.1;" when the resizing target object corresponds to object No. 3 (e.g., 200 cm² to 300 cm²), the correction amount is "0.2;" and when the resizing target object corresponds to object No. 4 (e.g., 300 cm² or greater), the correction amount is "0.3."

Note that, in enlargement of an object, the correction amount may be set so that subtraction does not result in a value equal to 0 or less, or when subtraction may result in a value equal to 0 or less, the lower limit of the corrected enlargement-reduction rate is set to a value greater than 0 (e.g., 0.3). In addition, in reduction of an object, in order to prevent the result of addition from excessively varying with respect to the operation rate or operation amount of the object, the upper limit of the corrected enlargement-reduction rate is set to a certain value greater than 1 (e.g., 3). As described above, a larger correction amount is applied for a larger size object, and a small value is set for the enlargement-reduction rate used in enlargement/reduction of an object.

**Table 2**

| Object No. | Correction Coefficient |
|---|---|
| 1 (100 cm² or less) | 0 (No Correction) |
| 2 (100 cm² or greater but not greater than 200 cm²) | 0.1 |
| 3 (200 cm² or greater but not greater than 300 cm²) | 0.2 |
| 4 (300 cm² or greater) | 0.3 |

Table 3 is an exemplary enlargement-reduction table which is referred when a certain value is set as an enlargement rate/reduction rate for each size region of an object regardless of the inter-point change rate. In this case, the enlargement rate used in enlargement of an object by pinch-out and the reduction rate used in reduction of an object by pinch-in are set, respectively.

According to Table 3: when the resizing target object corresponds to object No. 1 (e.g., up to 100 cm²), the enlargement rate is "2" and the reduction rate is "0.5;" when the resizing target object corresponds to object No. 2 (e.g., 100 cm² to 200 cm²), the enlargement rate is "1.5" and the reduction rate is "0.67;" when the resizing target object corresponds to object No. 3 (e.g., 200 cm² to 300 cm²), the enlargement rate is "1.2" and the reduction rate is "0.83;" and when the resizing target object corresponds to object No. 4 (e.g., 300 cm² or greater), the enlargement rate is "1.1" and the reduction rate is "0.91." In other words, a smaller enlargement rate/reduction rate is set for a larger size object. Instead of the enlargement rate/reduction rate, an enlargement amount/reduction amount may be set.

**Table 3**

| Object No. | Enlargement Rate/Reduction Rate |
|---|---|
| 1 (100 cm² or less) | 2/0.5 |
| 2 (100 cm² or greater but not greater than 200 cm²) | 1.5/0.67 |
| 3 (200 cm² or greater but not greater than 300 cm²) | 1.2/0.83 |
| 4 (300 cm² or greater) | 1.1/0.91 |

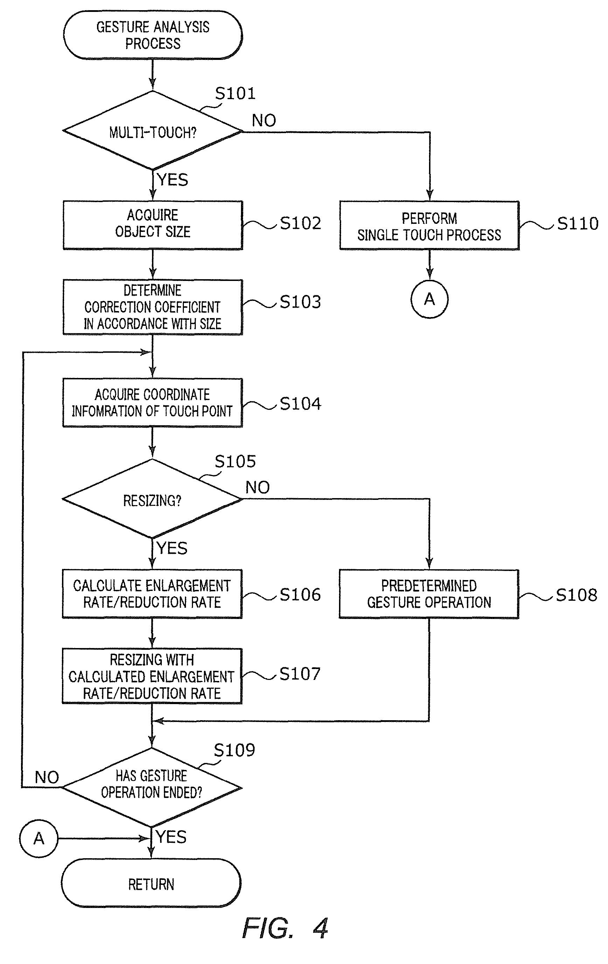

FIG. 4 is a flowchart illustrating an exemplary gesture analysis process to be executed by controller 11. This process is implemented when CPU 111 reads out and executes an information processing program stored in ROM 112 in response to turning on of the power of electronic whiteboard 10, execution of the main flow not illustrated, and detection of a gesture operation in the main flow, for example. A description will be herein given of a case where the value resulting from multiplication of the reference enlargement-reduction rate by the correction coefficient is set as the enlargement-reduction rate, and resizing is performed in accordance with the operation rate or operation amount.

At step S101, controller 11 determines whether an operation of touching two points in a region of an object (including a group) (hereinafter referred to as "multiple touch") is performed via operation receiver 12. Upon detection of a multiple touch ("YES" at step S101), the process flow advances to step S102.

Meanwhile, when it is determined that an operation of touching only one point in an object region (hereinafter referred to as "single touch") is performed ("NO" at step S101), the process flow advances to step S110. At step S110, a process corresponding to a single touch (for example, object selection, cancellation of object selection, object movement and/or the like) is executed. Note that, when it is determined that the touch operation has ended in the process corresponding to the single touch, the process flow returns to the main flow. In addition, when the touch operation changes from a single touch to a multiple touch, the process flow advances to step S102.

At step S102, controller 11 reads the size of the object selected by multiple touch from object information table 141 (process as object-size acquisition section 11D).

At step S103, controller 11 determines the correction coefficient in accordance with the size of the object where the multi-touch is performed (refer to Table 1, process as enlargement-reduction rate setting section 11E). Controller 11 determines the correction coefficient with reference to the correction table indicated in Table 1, for example. A smaller correction coefficient is determined for a larger size of an object which becomes the resizing target.

At step S104, controller 11 acquires coordinate information of a touch point in predetermined time (unit time) intervals. The acquired coordinate information pieces are sequentially stored in RAM 113 until the touch onto operation receiver 12 by the user, for example, is cancelled.

At step S105, controller 11 determines whether the gesture operation being executed is resizing based on the coordinate change of the touch point (process as gesture analysis section 11F). When the gesture operation being performed is resizing ("YES" at step S105), the process flow advances to step S106. When the gesture operation being executed does not allow for resizing ("NO" at step S105, for example in case of dragging or rotation), the process flow advances to step S108

More specifically, at step S105, controller 11 calculates measured values Mₘ, Dₘ, and θₘ of the determination indices of dragging, resizing, and rotation (sliding speed, inter-point change speed, and rotating speed) based on a change of the coordinates of the touch point. Then, controller 11 compares threshold values of Mₜₕ, Dₜₕ, and θₘ of the determination indices of dragging, resizing, and rotation with measured values Mₘ, Dₘ, and θₘ. When measured value Mₘ of the sliding speed is greater than threshold value Mₜₕ, the gesture operation being executed is dragging. When measured value Dₘ of the inter-point change speed is greater than threshold value Dₜₕ, the gesture operation being executed is resizing. When measured value θₘ of the rotating speed is determined to be greater than threshold value θₜₕ, the gesture operation being executed is rotation. Note that, when none of the gesture operations is valid, the processes of steps S104 and S105 are repeated.

At step S106, controller 11 calculates the enlargement rate/reduction rate or enlargement amount or reduction amount of the object based on a predetermined calculation method (inter-point change rate or inter-point change amount × enlargement-reduction rate) using the enlargement-reduction rate corrected using the correction coefficient (correction enlargement-reduction rate) determined at step S103 (process as enlargement-reduction rate setting section 11E). The larger the size of the object, the smaller the enlargement-reduction rate will be set. Note that, the inter-point change rate or inter-point change amount is updated in predetermined time intervals, so that the enlargement-reduction rate is updated every time the inter-point change rate or inter-point change amount is updated.

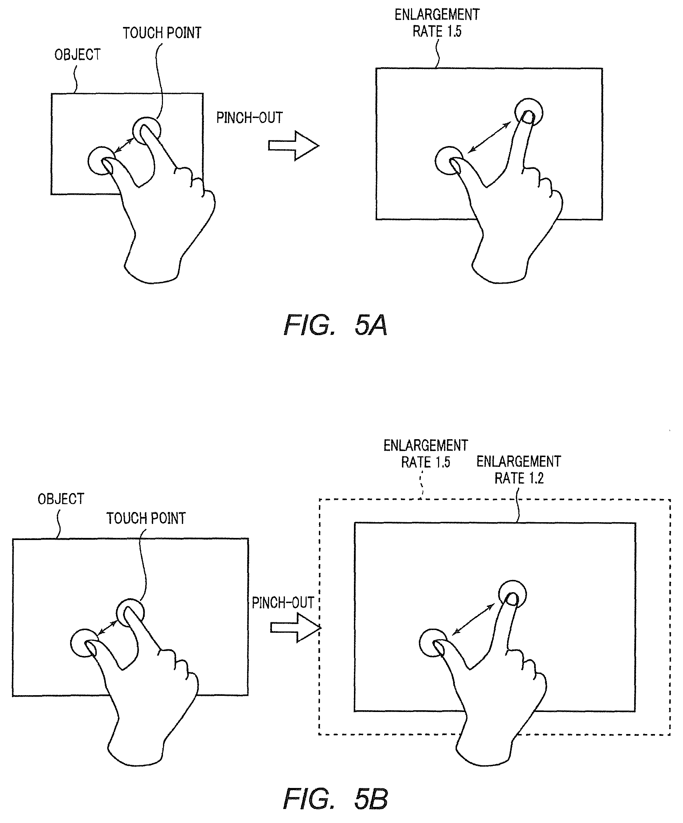

At step S107, controller 11 reflects the process assigned to resizing on the screen of display section 13 with reference to gesture operation table 143 (process as display control section 11C). More specifically, the object is enlarged or reduced using the enlargement rate/reduction rate or enlargement amount/reduction amount calculated at step S106. As illustrated in FIG. 5A or 5B, the larger the size of the object, the greater the degree of resizing is suppressed. Accordingly, even for a large-size object, a fine adjustment in resizing is made possible.

At step S108, controller 11 reflects the process assigned to the identified gesture operation (gesture operation other than resizing such as dragging or rotation, for example) on the screen of display section 13 with reference to gesture operation table 143.

At step S109, controller 11 determines whether the multiple touch gesture has ended. To be more specific, when the finger is detached from operation receiver 12 and the multi-touch is no longer detected, controller 11 determines that the multiple touch gesture has ended. When the multiple touch gesture has ended ("YES" at step S109), the process flow returns to the main flow. When the multiple touch gesture has not ended ("NO" at step S109), the process flow advances to step S104. Note that, when the touch operation changes from the multi-touch to single touch, the process flow advances to step S110.

In other words, in a series of resizing operations until a multiple touch gesture ends, the correction coefficient determined based on the initial object size is kept. Thus, the degree of resizing of the object does not change in this case, so that the user can easily know the operation amount for changing the object to a desired size.

Note that, in the gesture analysis process described above, the value resulting from addition and/or subtraction of the correction amount to and/or from the reference enlargement-reduction rate may be set as the enlargement-reduction rate, and resizing may be performed (refer to Table 2). In this case, at step S103 of FIG. 4, the correction amount is determined in accordance with the size of the object. At step S106, the enlargement rate/reduction rate or enlargement amount/reduction amount of the object is calculated based on a predetermined calculation method (inter-point change rate or inter-point change amount × enlargement-reduction rate) using the enlargement-reduction rate corrected using the determined correction amount (correction enlargement-reduction rate).

In addition, in the gesture analysis process described above, the degree of a size change of the object may be set in accordance with the size of the object regardless of the inter-point change rate or inter-point change amount, and resizing may be performed (refer to Table 3). In this case, in step S103 of FIG. 4, the enlargement rate/reduction rate or enlargement amount/reduction amount is set in accordance with the size of the object, and step S106 is omitted.

As described above, electronic whiteboard 10 described as an exemplary information processing device includes: operation receiver 12 capable of receiving a gesture operation including resizing; object-size acquisition section 11D configured to acquire a size of an object being the target for the gesture operation performed via operation receiver 12; enlargement-reduction rate setting section 11E serving as a resizing setting section configured to set a size change associated with resizing performed by a first gesture operation for a first object to a first degree, when the size of the first object acquired by object-size acquisition section 11D is a first size, and to set a degree of a size change associated with resizing performed by the first gesture operation for a second object to a second degree, when the size of the second object acquired by the object size acquisition section is a second size which is larger than the first size, the second degree being smaller than the first degree; gesture analysis section 11F configured to identify the gesture operation performed via operation receiver 12; and display control section 11C configured to reflect, when the gesture operation identified by gesture analysis section 11 F is resizing, the resizing of the object on the screen in accordance with the enlargement-reduction rate set by enlargement-reduction rate setting section 11E.

According to electronic whiteboard 10, the degree of a size change of the object at the time of resizing is appropriately set in accordance with the size of the operation target object. Thus, a fine adjustment is made possible even for a large-size object, so that the user can enlarge or reduce the object up or down to a desirable size. Accordingly, the operability in resizing using a multi-touch gesture is significantly improved.

While the invention made by this inventor has been specifically described based on an embodiment, the present invention is not limited to the above-mentioned embodiment and may be further modified within a range not departing from the gist of the invention defined by the appended claims.

For example, enlargement-reduction rate setting section 11E may set a larger degree of a size change of an object for a larger inter-point change speed based on the inter-point change speed (operation speed) in addition to the size of the object. Thus, when the inter-point change speed is so large that a fine size adjustment is presumably unnecessary, resizing is efficiently performed in conformity with the intention of the user. Accordingly, the operability in resizing using a multi-touch gesture is further improved.

In this case, Tables 4 to 6 are referred instead of Tables 1 to 3 illustrated in the embodiment, for example. In Table 4, enlargement rate/reduction rate = operation rate × enlargement-reduction rate, enlargement amount/reduction amount = operation amount × enlargement-reduction rate, and enlargement-reduction rate = reference enlargement-reduction rate × correction coefficient. In Table 5, enlargement rate/reduction rate = operation rate × enlargement-reduction rate, enlargement amount/reduction amount = operation amount × enlargement-reduction rate, and enlargement-reduction rate = reference enlargement-reduction rate ± correction amount.

According to Tables 4 to 6: setting the correction coefficient and/or the correction amount to vary in accordance with the operation speed or setting enlargement rate/reduction rate or enlargement amount/reduction amount to vary in accordance with the operation speed causes the degree of a size change of an object when the operation speed is larger than threshold value V1 to be set to a large value as compared with the degree of a size change of an object when the operation speed is not greater than threshold value V1.

**Table 4**

| Object No. | Correction Coefficient | |
|---|---|---|
| | Operation Speed ≤ V1 | Operation Speed > V1 |
| 1 (100 cm² or less) | 1 (No Correction) | 1 |
| 2 (100 cm² or greater but not greater than 200 cm²) | 0.5 | 1 |
| 3 (200 cm² or greater but not greater than 300 cm²) | 0.33 | 0.66 |
| 4 (300 cm² or greater) | 0.25 | 0.5 |

**Table 5**

| Object No. | Correction Amount | |
|---|---|---|
| | Operation Speed ≤ V1 | Operation Speed > V1 |
| 1 (100 cm² or less) | 0 (No Correction) | 0 |
| 2 (100 cm² or greater but not greater than 200 cm²) | 0.1 | 0.05 |
| 3 (200 cm² or greater but not greater than 300 cm²) | 0.2 | 0.1 |
| 4 (300 cm² or greater) | 0.3 | 0.15 |

**Table 6**

| Object No. | Enlargement Rate/Reduction Rate | |
|---|---|---|
| | Operation Speed ≤ V1 | Operation Speed > V1 |
| 1 (100 cm² or less) | 2/0.5 | ← |
| 2 (100 cm² or greater but not greater than 200 cm²) | 1.5/0.67 | 1.75/0.57 |
| 3 (200 cm² or greater but not greater than 300 cm²) | 1.2/0.83 | 1.4/0.71 |
| 4 (300 cm² or greater) | 1.1/0.91 | 1.2/0.83 |

Moreover, in Tables 4 to 6, threshold value V2 greater than threshold value V1 is provided, and when the operation speed is greater than V2, the enlargement-reduction rate may be set in a similar manner to the object serving as the reference (object No. 1) regardless of the size of the object. More specifically, when the operation speed is greater than threshold value V2, the correction coefficient identical to that of object No. 1 may be set regardless of the size of the object in Table 4. In Table 5, the correction amount identical to that of object No. 1 is applied regardless of the size of the object. In Table 6, the enlargement rate/reduction rate or enlargement amount/reduction amount identical to that of object No. 1 is set regardless of the size of the object. When the user desires to change the size of the object to a large extent, the configurations mentioned above are effective.

In addition, for example, enlargement-reduction rate setting section 11E may reset the enlargement-reduction rate based on the size of the object after resizing in a series of resizing operations. More specifically, in the flowchart of FIG. 4, when a multiple touch gesture has not ended ("NO" at step S109), the process flow may move to step S102. Thus, when the size of the object becomes large in association with the resizing of the object, a fine adjustment is made possible without ending the multiple touch gesture once and starting an operation all over again.

In the above embodiment, the size of an object is divided into a plurality of regions and the degree of a size change in association with resizing performed by the reference operation on the object is set, but it is not limited to this configuration, and the degree of a size change may be continuously determined in accordance with the size of the object by preparing a calculation formula for calculating the degree of a size change in accordance with the size of the object (i.e., the larger the size of the object, the smaller the degree of a size change will be set), for example.

While electronic whiteboard 10 executes an information processing program to implement the above-described information processing in the embodiment, the information processing may also be implemented with use of a hardware circuit. The information processing program may be stored in a computer-readable storage medium such as a magnetic disc, an optical disk, or a flash memory so as to be provided to an apparatus (for example, a personal computer) which can be used as the conference support apparatus. Alternatively, the information processing program may be provided by downloading through communication lines such as the Internet.

The information processing device of the embodiment of the present invention is applicable to, in addition to the electronic whiteboard described in the embodiment, an information processing device provided with an operation receiver capable of receiving a gesture operation, such as a touch panel or touch pad (e.g., tablet terminal, notebook computer, smartphone, pen tablet terminal in which no display panel is placed over the touch section, or the like). In addition, the information processing device of the present invention is applicable to an information processing device or system that allows an object operation to be performed with a motion sensor capable of accurately detecting the motion of the hand of the user. The information processing device of the present invention is also applicable to a head-mount display information processing device provided with a motion sensor configured to detect the motion of the hand of the user.

The embodiment disclosed herein is only exemplary in all aspects and should not be considered as limitative. The scope of the present invention is specified by the following claims, not by the above-mentioned description, and all modifications which are equivalent to the claims in their meaning and within the scope of claims are to be included.

## Claims

1. An information processing device (10) comprising:
an operation receiver (12) capable of receiving a gesture operation including resizing;
a gesture analysis section (11F) that identifies the gesture operation performed via the operation receiver; and
a display control section (11C) that reflects, when the gesture operation identified by the gesture analysis section is resizing, the resizing of an object on a screen,
**characterized in that** the information processing device comprises:
an object-size acquisition section (11D) that acquires a size of the object being a target for the gesture operation performed via the operation receiver; and
a size-change setting section (11E) that sets a size change associated with resizing performed by a first gesture operation for a first object to a first degree, when the size of the first object acquired by the object-size acquisition section is a first size, and that sets a degree of a size change associated with resizing performed by the first gesture operation for a second object to a second degree, when the size of the second object acquired by the object-size acquisition section is a second size which is larger than the first size, the second degree being smaller than the first degree, wherein
the display control section reflects, when the gesture operation identified by the gesture analysis section is resizing, the resizing of the object on the screen in accordance with the degree of the size change set by the size-change setting section.

2. The information processing device according to claim 1, wherein the size-change setting section determines a correction coefficient for correcting the degree of the size change in accordance with the size of the object and sets a value resulting from multiplication of a reference value by the correction coefficient as the degree of the size change.

3. The information processing device according to claim 1, wherein the size-change setting section determines a correction amount for correcting the degree of the size change in accordance with the size of the object and sets a value resulting from addition and/or subtraction of the correction amount to and/or from a reference value as the degree of the size change.

4. The information processing device according to claim 1, wherein the size-change setting section sets a certain value as the degree of the size change for each of a plurality of size regions of the object regardless of a change in distance between two touch points.

5. The information processing device according to any one of claims 2 to 4, wherein the size-change setting section sets the degree of the size change to be a large degree based on the size of the object, and a speed of a change in distance between two touch points.

6. The information processing device according to any one of claims 1 to 5, wherein size-change setting section sets the degree of the size change based on an initial object size in a series of resizing operations.

7. The information processing device according to any one of claims 1 to 5, wherein the size-change setting section resets the degree of the size change based on the size of the object after resizing in a series of resizing operations.

8. An information processing program which causes a computer of an information processing device including an operation receiver capable of receiving a gesture operation including resizing to execute processing comprising:
acquiring a size of an object being a target for the gesture operation performed via the operation receiver;
setting a size change associated with resizing performed by a first gesture operation for a first object to a first degree, when the acquired size of the first object is a first size;
setting a degree of a size change associated with resizing performed by the first gesture operation for a second object to a second degree, when the acquired size of the second object is a second size which is larger than the first size, the second degree being smaller than the first degree;
identifying the gesture operation performed via the operation receiver; and
reflecting the resizing of the object on a screen in accordance with the set degree of the size change, when the identified gesture operation is resizing.

9. The information processing program according to claim 8, wherein a correction coefficient for correcting the degree of the size change is determined in accordance with the size of the object, and a value resulting from multiplication of a reference value by the correction coefficient is set as the degree of the size change.

10. The information processing program according to claim 8, wherein a correction amount for correcting the degree of the size change is determined in accordance with the size of the object, and a value resulting from addition and/or subtraction of the correction amount to and/or from a reference value is set as the degree of the size change.

11. The information processing program according to claim 8, wherein a certain value is set as the degree of the size change for each of a plurality of size regions of the object regardless of a change in distance between two touch points.

12. The information processing program according to any one of claims 9 to 11, wherein the degree of the size change is set to be a large degree based on the size of the object, and a speed of a change in distance between two touch points.

13. The information processing program according to any one of claims 8 to 12, wherein the degree of the size change is set based on an initial object size in a series of resizing operations.

14. The information processing program according to any one of claims 8 to 12, wherein the degree of the size change is reset based on the size of the object after resizing in a series of resizing operations.

15. An information processing method in an information processing device including an operation receiver capable of receiving a gesture operation including resizing, the method comprising:
acquiring a size of an object being a target for the gesture operation performed via the operation receiver;
setting a size change associated with resizing performed by a first gesture operation for a first object to a first degree, when the acquired size of the first object is a first size;
setting a degree of a size change associated with resizing performed by the first gesture operation for a second object to a second degree, when the acquired size of the second object is a second size which is larger than the first size, the second degree being smaller than the first degree;
identifying the gesture operation performed via the operation receiver; and reflecting the resizing of the object on a screen in accordance with the set degree of the size change, when the identified gesture operation is resizing.
